(19) **Europäisches Patentamt / European Patent Office / Office européen des brevets**

(11) **EP 4 678 491 A1**

(12) **EUROPEAN PATENT APPLICATION**
published in accordance with Art. 153(4) EPC

(43) Date of publication:
**14.01.2026 Bulletin 2026/03**

(21) Application number: **24769681.8**

(22) Date of filing: **02.02.2024**

(51) International Patent Classification (IPC):
**B60W 20/15** (2016.01)

(52) Cooperative Patent Classification (CPC):
**Y02T 10/84**

(86) International application number:
**PCT/CN2024/075604**

(87) International publication number:
**WO 2024/187985 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.03.2023 CN 202310232056**

(71) Applicant: **Chongqing Changan Automobile Co., Ltd.**
**Chongqing 400023 (CN)**

(72) Inventors:
• **LIU, Bin**
**Chongqing 400023 (CN)**
• **WANG, BoZhou**
**Chongqing 400023 (CN)**
• **CAI, Jianwei**
**Chongqing 400023 (CN)**

(74) Representative: **Barker Brettell LLP**
**100 Hagley Road**
**Edgbaston**
**Birmingham B16 8QQ (GB)**

(54) **METHOD AND APPARATUS FOR DETERMINING OPTIMAL ECONOMIC OPERATING POINT OF HYBRID VEHICLE, AND VEHICLE, MEDIUM, AND DEVICE**

(57) A method and apparatus for controlling an optimal economic operating point of a hybrid vehicle, and a vehicle, a medium, and a device. The method includes: obtaining actual operational parameters and equivalent fuel consumption power corresponding to a current operating point of the vehicle; determining, in combination with the actual operational parameters corresponding to a current operating point of the vehicle, a most economical operating point of the vehicle under different driving modes and an optimal equivalent fuel consumption power corresponding to the most economical operating point; and determining, based on the optimal equivalent fuel consumption power corresponding to the most economical operating point of the vehicle under the different driving modes and the equivalent fuel consumption power corresponding to the current operating point of the vehicle, an optimal economic operating point of the hybrid vehicle.

FIG. 1

## Description

This application claims priority to Chinese Patent Application No. 202310232056.9, filed to the China National Intellectual Property Administration on March 10, 2023 and entitled "METHOD AND APPARATUS FOR DETERMINING OPTIMAL ECONOMIC OPERATING POINT OF HYBRID VEHICLE, VEHICLE, MEDIUM, AND DEVICE", which is hereby incorporated by reference in its entirety.

## TECHNICAL FIELD

The present application relates to the field of hybrid vehicle control and, in particular, to a method and apparatus for determining an optimal economic operating point of a hybrid vehicle, a vehicle, a medium and a device.

## BACKGROUND

Hybrid vehicles have two energy sources: fuel and battery, and the key to achieving low fuel consumption in vehicles lies in how to coordinate operations of an engine and a motor to achieve the highest comprehensive utilization efficiency of the both types of energies. However, during an operation of a vehicle, the engine and the motor may operate at a plurality of operating points, and different operating points will cause different energy consumption. At the same time, the above operating points will also be subjected to restrictions under different driving modes. Therefore, it has become an urgent problem, to be solved by engineering and technical personnel, how to accurately obtain an optimal economic operating point of the vehicle and achieve the highest comprehensive utilization efficiency of energy to the greatest extent.

## SUMMARY

The present application provides a method and apparatus for determining an optimal economic operating point of a hybrid vehicle, a vehicle, a medium and a device. By calculating a demand torque at a driver's wheel end based on actual operational parameters corresponding to a current operating point of the vehicle, and simultaneously calculating a most economical operating point at which the vehicle may operate under different driving modes, and calculating an equivalent fuel consumption power at the current operating point and an optimal equivalent fuel consumption power corresponding to the most economical operating point of the vehicle under different driving modes, the optimal economic operating point of the hybrid vehicle is determined, thereby achieving the highest comprehensive energy utilization efficiency.

The technical solution of the present application is as follows.

The present application provides a method for determining an optimal economic operating point of a hybrid vehicle, where the hybrid vehicle at least includes: a power battery, an engine, a drive motor, a generator and a clutch, the engine is connected to or disconnected from a wheel end through the clutch, the drive motor is directly connected to the wheel end, the drive motor is connected to the power battery, the generator is connected to the engine, and the generator is connected to the power battery and/or the drive motor, and the method includes:

obtaining actual operational parameters and equivalent fuel consumption power corresponding to a current operating point of the vehicle;

determining, in combination with the actual operational parameters corresponding to a current operating point of the vehicle, a most economical operating point of the vehicle under different driving modes and an optimal equivalent fuel consumption power corresponding to the most economical operating point;

determining, based on the optimal equivalent fuel consumption power corresponding to the most economical operating point of the vehicle under all driving modes and the equivalent fuel consumption power corresponding to the current operating point of the vehicle, an optimal economic operating point of the hybrid vehicle.

Preferably, driving modes of the vehicle include a series mode and a parallel mode, and a step of determining, in combination with the actual operational parameters corresponding to the current operating point of the vehicle, the most economical operating point of the vehicle under the series mode and the parallel mode and the optimal equivalent fuel consumption power corresponding to the most economical operating point includes:

determining target operational parameters corresponding to a plurality of operating points of the vehicle under a corresponding driving mode;

determining, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode;

determining, from the equivalent fuel consumption power corresponding to the plurality of operating points of the vehicle under the corresponding driving mode, an equivalent fuel consumption power with a minimum value as the optimal equivalent fuel consumption power, and determining an operating point corresponding to the optimal equivalent fuel consumption power as the most economical operating point of the vehicle under the corresponding driving mode.

Preferably, a specific method for determining target operational parameters of a plurality of operating points under the series mode includes:

locating a most economical operating point of the engine under the series mode in a universal characteristics curve of the engine first;

taking a target power of the engine corresponding to the most economical operating point of the engine as a reference power point, increasing or decreasing N power points at an equal interval in an optimal fuel economy curve of the engine to obtain 2N+1 power points in total, and determining the 2N+1 power points as the plurality of operating points under the series mode;

determining a target torque of the engine, a target speed of the engine, a target power loss of the engine, a target torque of the generator, a target speed of the generator, a target power loss of the generator, a target torque of the drive motor, a target power loss of the drive motor, a target charge and discharge power loss of the battery, and a target SOC of the battery corresponding to each of the 2N+1 power points respectively;

determining the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery, and the target SOC of the battery corresponding to each power point as target operational parameters for next operating point under the series mode.

Preferably, a specific method for determining target operational parameters of a plurality of operating points under the parallel mode includes:

locating a most economical operating point of the engine under the parallel mode in an optimal fuel economy curve of the engine first;

taking a target torque of the engine corresponding to the most economical operating point of the engine as a reference torque point, increasing or decreasing N torque points at an equal interval to obtain 2N+1 torque points in total, and determining the 2N+1 torque points as a plurality of operating points under the parallel mode;

determining a target speed of the engine, a target torque of the engine, a target power loss of the engine, a target torque of the drive motor, a target power loss of the drive motor, a target charge and discharge power loss of the battery, and a target SOC of the battery corresponding to each of the 2N+1 torque points respectively;

determining the target speed of the engine, the target torque of the engine, the target power loss of the engine, the target torque of the drive motor, the target power loss of the drive motor, the target charge and discharge power loss of the battery, and the target SOC of the battery corresponding to each torque point as target operational parameters for next operating point under the parallel mode.

Preferably, driving modes of the vehicle further include a pure electric mode, and a step of determining, in combination with the actual operational parameters corresponding to the current operating point of the vehicle, the most economical operating point of the vehicle under the pure electric mode and the optimal equivalent fuel consumption power corresponding to the most economical operating point includes:

determining, according to the actual operational parameters corresponding to the current operating point of the vehicle, a demand torque at a driver's wheel end and a target SOC of the battery;

determining, based on the demand torque at the driver's wheel end, a target torque of the drive motor, a target power loss of the drive motor, and a target charge and discharge power loss of the battery of the vehicle under the pure electric mode;

determining an operating point corresponding to the target torque of the drive motor, the target power loss of the drive motor, the target charge and discharge power loss of the battery and the target SOC of the battery as a most economical operating point of the vehicle under the pure electric mode, and determining, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode.

Preferably, the actual operational parameters corresponding to the current operating point of the vehicle include: a vehicle speed, an accelerator pedal signal, an ambient temperature, an altitude and a battery temperature, and the step of determining, according to the actual operational parameters corresponding to the current operating point of the vehicle, the demand torque at the driver's wheel end and the target SOC of the battery includes:

determining, according to the vehicle speed and the accelerator pedal signal, the demand torque at the driver's wheel end;

determining, according to the ambient temperature, the altitude and the battery temperature, the target SOC of the battery corresponding to different driving modes;

where the target SOCs of the battery corresponding to different driving modes are different under the same condition of the ambient temperature, the altitude, and the battery temperature.

Preferably, the actual operational parameters corresponding to the current operating point of the vehicle further include: a real-time SOC of the battery and a current speed of the drive motor, and a step of determining, based on the actual operational parameters corresponding to the current operating point of the vehicle and the target operational parameters corresponding to the operating point of the vehicle under the series mode, equivalent fuel consumption power corresponding to the operating point of the vehicle under the series mode includes:

calculating the equivalent fuel consumption power $J_{series}$ corresponding to the operating point under the series mode by the formula:

$$J_{series} = P_{fuel-series}(t) + s_{series}(t) * P_{batt-series}(t)$$

where, $s_{series}(t)$ is an equivalent factor corresponding to the operating point under the series mode, and its value is obtained by looking up a predetermined relationship table of a preset real-time SOC of the battery, the target SOC of the battery corresponding to the operating point under the series mode, and an equivalent factor under the series mode;

$P_{fuel}$-series (t) is a fuel consumption power corresponding to the operating point under the series mode, $P_{fuel}$-series (t) = (a target speed of the engine corresponding to the operating point under the series mode * a target torque of the engine corresponding to the operating point under the series mode) / 9550 + a target power loss of the engine corresponding to the operating point under the series mode;

$P_{batt}$-series (t) is an electric energy consumption power corresponding to the operating point under the series mode, $P_{batt}$-series (t) = (a target speed of the generator corresponding to the operating point under the series mode * a target torque of the generator corresponding to the operating point under the series mode) / 9550 + a target power loss of the generator corresponding to the operating point under the series mode + (a current speed of the drive motor * a target torque of the drive motor corresponding to the operating point under the series mode) / 9550 + a target power loss of the drive motor corresponding to the operating point under the series mode + a target charge and discharge power loss of the battery corresponding to the operating point under the series mode.

Preferably, the actual operational parameters corresponding to the current operating point of the vehicle further include: a real-time SOC of the battery and a current speed of the drive motor, and a step of determining, based on the actual operational parameters corresponding to the current operating point of the vehicle and the target operational parameters corresponding to the operating point of the vehicle under the parallel mode, equivalent fuel consumption power corresponding to the operating point of the vehicle under the parallel mode includes:

calculating the equivalent fuel consumption power $J_{parallel}$ corresponding to the operating point under the parallel mode by the formula:

$$J_{parallel} = P_{fuel-parallel}(t) + s_{parallel}(t) * P_{batt-parallel}(t)$$

where, $S_{parallel}(t)$ is an equivalent factor corresponding to the operating point under the parallel mode, and its value is obtained by looking up a predetermined relationship table of a preset real-time SOC of the battery, the target SOC of the battery corresponding to the operating point under the parallel mode, and an equivalent factor under the parallel mode;

$P_{fuel}$-parallel (t) is a fuel consumption power corresponding to the operating point under the parallel mode, $P_{fuel}$-parallel (t) = (a target speed of the engine corresponding to the operating point under the parallel mode * a target torque of the engine corresponding to the operating point under the parallel mode) / 9550 + a target power loss of the engine corresponding to the operating point under the parallel mode;

$P_{batt-parallel}$ (t) is an electric energy consumption power corresponding to the operating point under the parallel mode, $P_{batt-parallel}$ (t) = (a current speed of the drive motor * a target torque of the drive motor corresponding to the operating point under the parallel mode) / 9550 + a target power loss of the drive motor corresponding to the operating point under the parallel mode + a target charge and discharge power loss of the battery corresponding to the operating point under the parallel mode.

Preferably, actual operational parameters corresponding to the current operating point of the vehicle further include: a real-time SOC of the battery and a current speed of the drive motor, and the step of determining, based on the actual operational parameters, the target torque of the drive motor, the target power loss of the drive motor, the target charge and discharge power loss of the battery and the target SOC of the battery corresponding to the current operating point of the vehicle, the optimal equivalent fuel consumption power corresponding to the most economical operating point of the vehicle under the pure electric mode includes:

calculating the equivalent fuel consumption power $J_{EV}$ corresponding to the operating point under the pure electric mode by the formula:

$$ J_{EV} = s_{EV}(t) * P_{battEV}(t) $$

where, $s_{EV}$ (t) is an equivalent factor corresponding to the operating point under the pure electric mode, and its value is obtained by looking up a predetermined relationship table of a preset real-time SOC of the battery, the target SOC of the battery corresponding to the operating point under the pure electric mode, and an equivalent factor under the pure electric mode;

$P_{battEV}$ (t) is an electric energy consumption power corresponding to the operating point under the pure electric mode, $P_{battEV}$ (t) = a current speed of the drive motor * a target torque of the drive motor corresponding to the operating point under the pure electric mode / 9550 + a target power loss of the drive motor corresponding to the operating point under the pure electric mode + a target charge and discharge power loss of the battery corresponding to the operating point under the pure electric mode.

Preferably, the step of determining, based on the optimal equivalent fuel consumption power corresponding to the most economical operating point of the vehicle under all driving modes and the equivalent fuel consumption power corresponding to the current operating point of the vehicle, the optimal economic operating point of the hybrid vehicle includes:

selecting a minimum value from the optimal equivalent fuel consumption power corresponding to the most economical operating point of the vehicle under all driving modes;

determining, if a difference between the equivalent fuel consumption power corresponding to the current operating point of the vehicle and the minimum value is ≥ a preset calibration value, an operating point corresponding to the minimum value as the optimal economic operating point;

determining, if a difference between the equivalent fuel consumption power corresponding to the current operating point of the vehicle and the minimum value is < a preset calibration value, the current operating point of the vehicle as an optimal economic operating point.

The present application provides an apparatus for determining an optimal economic operating point of a hybrid vehicle, where the hybrid vehicle at least includes: a power battery, an engine, a drive motor, a generator and a clutch, the engine is connected to or disconnected from a wheel end through the clutch, the drive motor is directly connected to the wheel end, the drive motor is connected to the power battery, the generator is connected to the engine, and the generator is connected to the power battery and/or the drive motor, and the apparatus includes:

an acquisition module, configured to acquire actual operational parameters and equivalent fuel consumption power corresponding to a current operating point of the vehicle;

a most economical parameter determination module, configured to determine, in combination with the actual operational parameters corresponding to a current operating point of the vehicle, a most economical operating point of the vehicle under different driving modes and an optimal equivalent fuel consumption power corresponding to the most economical operating point;

an optimal economic operating point determination module, configured to determine, based on the optimal equivalent fuel consumption power corresponding to the most economical operating point of the vehicle under all driving modes and the equivalent fuel consumption power corresponding to a current operating point of the vehicle, an optimal economic operating point of the hybrid vehicle.

Preferably, driving modes of the vehicle include a series mode and a parallel mode, and the most economical parameter determination module includes:

a determination unit, configured to determine target operational parameters corresponding to a plurality of operating points of the vehicle under a corresponding driving mode;

an equivalent fuel consumption power determination unit, configured to determine, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode;

a first most economical parameter determination unit, configured to determine, from the equivalent fuel consumption power corresponding to the plurality of operating points of the vehicle under the corresponding driving mode, an equivalent fuel consumption power with a minimum value as the optimal equivalent fuel consumption power, and determine an operating point corresponding to the optimal equivalent fuel consumption power as the most economical operating point of the vehicle under the corresponding driving mode.

Preferably, when the driving mode of the vehicle is the series mode, the determination unit is specifically configured to:

locate a most economical operating point of the engine under the series mode in a universal characteristics curve of the engine first;
take a target power of the engine corresponding to the most economical operating point of the engine as a reference power point, increase or decrease N power points at an equal interval in an optimal fuel economy curve of the engine to obtain 2N+1 power points in total, and determine the 2N+1 power points as the plurality of operating points under the series mode;
determine a target torque of the engine, a target speed of the engine, a target power loss of the engine, a target torque of the generator, a target speed of the generator, a target power loss of the generator, a target torque of the drive motor, a target power loss of the drive motor, a target charge and discharge power loss of the battery, and a target SOC of the battery corresponding to each of the 2N+1 power points respectively;

determine the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery, and the target SOC of the battery corresponding to each power point as target operational parameters for next operating point under the series mode.

Preferably, when the driving mode of the vehicle is the parallel mode, the determination unit is specifically configured to:

locate a most economical operating point of the engine under the parallel mode in an optimal fuel economy curve of the engine first;
take a target torque of the engine corresponding to the most economical operating point of the engine as a reference torque point, increase or decrease N torque points at an equal interval to obtain 2N+1 torque points in total, and determine the 2N+1 torque points as a plurality of operating points under the parallel mode;
determine a target speed of the engine, a target torque of the engine, a target power loss of the engine, a target torque of the drive motor, a target power loss of the drive motor, a target charge and discharge power loss of the battery, and a target SOC of the battery corresponding to each of the 2N+1 torque points respectively;
determine the target speed of the engine, the target torque of the engine, the target power loss of the engine, the target torque of the drive motor, the target power loss of the drive motor, the target charge and discharge power loss of the battery, and the target SOC of the battery corresponding to each torque point as target operational parameters for next operating point under the parallel mode.

Preferably, the driving modes of the vehicle further include a pure electric mode, and the most economical parameter determination module further includes:

a demand torque and SOC determination unit, configured to determine, according to the actual operational parameters corresponding to the current operating point of the vehicle, a demand torque at a driver's wheel end and a target SOC of the battery;

a drive motor and battery parameter determination unit, configured to determine, based on the demand torque at the driver's wheel end, a target torque of the drive motor, a target power loss of the drive motor, and a target charge and discharge power loss of the battery of the vehicle under the pure electric mode;

a second most economical parameter determination unit, configured to determine an operating point corresponding to the target torque of the drive motor, the target power loss of the drive motor, the target charge and discharge power loss of the battery and the target SOC of the battery as a most economical operating point of the vehicle under the pure electric mode, and determine, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode.

Preferably, the optimal economic operating point determination module includes:

a minimum value selection unit, configured to select a minimum value from the optimal equivalent fuel consumption power corresponding to the most economical operating point of the vehicle under all driving modes;

a first optimal economic operating point determination unit, configured to determine, if a difference between the equivalent fuel consumption power corresponding to the current operating point of the vehicle and the minimum value is $\geq$ a preset calibration value, an operating point corresponding to the minimum value as the optimal economic operating point;

a second optimal economic operating point determination unit, configured to determine, if a difference between the equivalent fuel consumption power corresponding to the current operating point of the vehicle and the minimum value is < a preset calibration value, the current operating point of the vehicle as an optimal economic operating point.

The present application also provides a vehicle, including the apparatus for determining a target driving mode of the hybrid vehicle from an economic perspective as described above.

The present application also provides a control device, including a processor, a memory, and a program or instructions stored in the memory and running in the processor, where the program or the instructions, when executed by the processor, implement steps of the method for determining the optimal economic operating point of the hybrid vehicle as described above.

The present application also provides a readable storage medium storing a program or instructions which, when executed by a processor, implement steps of the method for determining the optimal economic operating point of the hybrid vehicle as described above.

The present application also provides a computer program product, including a computer program which, when executed by a processor, implements steps of the method for determining the optimal economic operating point of the hybrid vehicle as described above.

The beneficial effects of the present application are as follows.

By calculating a demand torque at a driver's wheel end based on actual operational parameters corresponding to a current operating point of the vehicle, and simultaneously calculating a most economical operating point at which the vehicle may operate under different driving modes, and calculating an equivalent fuel consumption power at the current operating point and an optimal equivalent fuel consumption power corresponding to the most economical operating point of the vehicle under different driving modes, the optimal economic operating point based on the vehicle is determined, so that the vehicle can always operate at the optimal economic operating point, thereby achieving the lowest energy consumption of the vehicle, improving the comprehensive driving range of the vehicle, and providing users an ultimate long-range experience.

## BRIEF DESCRIPTION OF DRAWINGS

FIG. 1 is a flowchart of a method for controlling an optimal economic operating point of a hybrid vehicle in an embodiment.

FIG. 2 is a structural block diagram of an apparatus for controlling an optimal economic operating point of a hybrid vehicle in an embodiment.

DESCRIPTION OF EMBODIMENTS

The implementations of the present application will be described below with reference to the drawings and preferred embodiments. A person skilled in the art can easily understand other advantages and effects of the present application from the contents disclosed in this specification. The present application can also be implemented or applied through other different specific implementations, and various details in this specification may also be subjected to various modifications or changes based on different viewpoints and applications without departing from the spirit of the present application. It should be understood that the preferred embodiments are only for illustrating the present application, not for limiting the scope of protection of the present application.

It should be noted that the illustrations provided in the following embodiments only illustrate the basic concept of the present application in a schematic manner, and thus the illustrations only show components related to the present application rather than being drawn according to the number, shape, and size of components in actual implementation. In actual implementation, the type, quantity, and proportion of each component may be arbitrarily changed, and the layout of the components may also be more complicated.

Since hybrid vehicles in the prior art only consider selecting the vehicle's driving mode in combination with some calibration data of the vehicle, the accuracy of determining the target driving mode of the vehicle is not high. In order to solve the above problem, an embodiment of the present application provides a method for controlling an optimal economic operating point of a hybrid vehicle. The method no longer relies solely on the accuracy of the SOC and vehicle speed signals, as well as calibration experience, but calculates the demand torque at the driver's wheel end based on the actual operational parameters corresponding to the current operating point of the vehicle, and simultaneously calculates the most economical operating point at which the vehicle can operate under different driving modes. The optimal economic operating point of the vehicle is determined by calculating the equivalent fuel consumption power at the current operating point and the optimal equivalent fuel consumption power corresponding to the most economical operating point of the vehicle under different driving modes, so that the vehicle can always operate in a state with the highest comprehensive energy utilization efficiency.

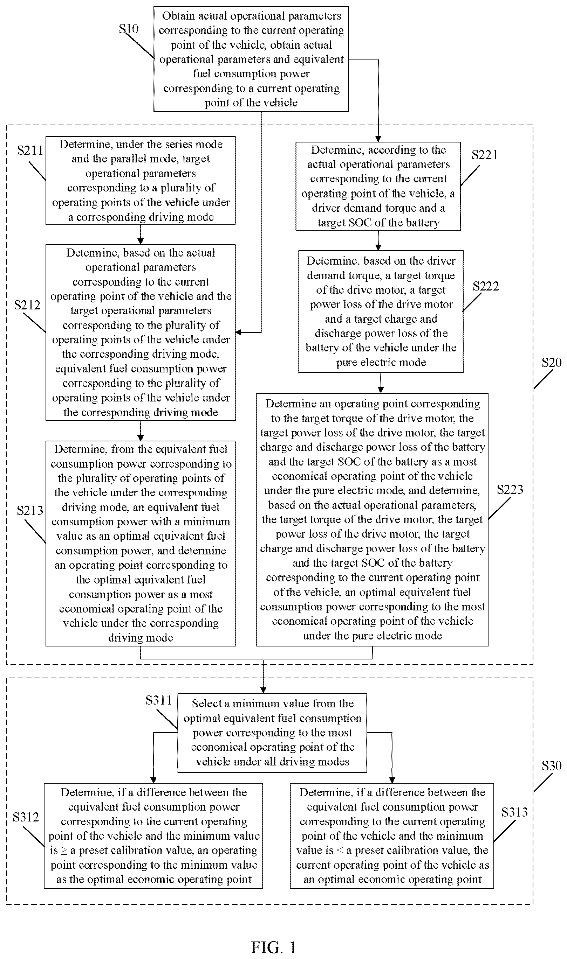

As shown in FIG. 1, determination of the optimal economic operating point of the hybrid vehicle provided in the present embodiment specifically includes the following.

Step S10, obtain actual operational parameters and equivalent fuel consumption power corresponding to a current operating point of the vehicle.

The actual operational parameters corresponding to the current operating point of the vehicle include: a vehicle speed, an accelerator pedal signal, a real-time SOC of the battery, a current speed of the drive motor, an ambient temperature, an altitude, and a battery temperature.

The above-mentioned vehicle speed signal and accelerator pedal signal are acquired in real time from relevant sensors in the vehicle. The real-time SOC of the battery is obtained from the battery control unit, the current speed of the drive motor is obtained from the drive motor control unit, the ambient temperature and the altitude are obtained from the engine control unit, and the battery temperature is obtained from the battery control unit.

Step S20, determine, in combination with the actual operational parameters corresponding to a current operating point of the vehicle, a most economical operating point of the vehicle under different driving modes and an optimal equivalent fuel consumption power corresponding to the most economical operating point.

In the present embodiment, the vehicle driving modes include a pure electric mode, a series mode and a parallel mode.

It is determined, based on the actual operational parameters at the current operating point of the vehicle, a demand torque at a driver's wheel end.

Under the series mode and the parallel mode, the step S20 specifically includes the following.

Step S211, determine target operational parameters corresponding to a plurality of operating points of the vehicle under a corresponding driving mode.

Step S212, determine, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode.

Step S213, determine, from the equivalent fuel consumption power corresponding to the plurality of operating points of the vehicle under the corresponding driving mode, an equivalent fuel consumption power with a minimum value as an optimal equivalent fuel consumption power, and determine an operating point corresponding to the optimal equivalent fuel consumption power as a most economical operating point of the vehicle under the corresponding driving mode.

In step S211, a specific method for determining the target operational parameters of a plurality of operating points under the series mode includes:

locating a most economical operating point of the engine under the series mode in a universal characteristics curve of the engine first;

taking a target power of the engine corresponding to the most economical operating point of the engine as a reference power point, increasing or decreasing N power points at an equal interval in an optimal fuel economy curve of the engine to obtain 2N+1 power points in total, and determining the 2N+1 power points as the plurality of operating points under the series mode;

determining a target torque of the engine, a target speed of the engine, a target power loss of the engine, a target torque of the generator, a target speed of the generator, a target power loss of the generator, a target torque of the drive motor, a target power loss of the drive motor, a target charge and discharge power loss of the battery, and a target SOC of the battery corresponding to each of the 2N+1 power points respectively;

determining the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery, and the target SOC of the battery corresponding to each power point as target operational parameters for next operating point under the series mode.

The target torque of the engine and the target rotate speed of the engine are determined by the most economical operating point of the engine combined with the optimal fuel economy curve of the engine. The most economical operating point of the engine is obtained by the pre-calibrated universal characteristics curve of the engine related to fuel consumption, speed, and torque. The optimal fuel economy curve of the engine is obtained by the pre-calibrated universal characteristics curve of the engine related to fuel consumption, speed, and torque.

The target power loss of the engine is determined by looking up a table based on the target torque of the engine and the target rotate speed of the engine.

Further, in combination with the transmission speed ratio from the engine to the generator, the corresponding target torque of the generator, target speed of the generator, and target power loss of the generator are determined based on the target torque of the engine, the target speed of the engine, and the target power loss of the engine.

The target torque of the drive motor is determined by the current speed of the drive motor, the demand torque at the driver's wheel end, and the drive motor-to-vehicle end speed ratio. The demand torque at the driver's wheel end is obtained by looking up a table based on the relationship between the pre-calibrated vehicle speed and the accelerator pedal signal.

The target charge and discharge power of the battery is determined by the target torque of the generator, the target speed of the generator, the target power loss of the generator, the target torque of the drive motor, the current speed of the drive motor, and the target power loss of the drive motor. Where, the target charge and discharge power of the battery = the target power of the drive motor (calculated according to the actual speed of the drive motor and the target torque of the drive motor) + the target power loss of the drive motor (determined by looking up a table according to the actual speed of the drive motor and the target torque of the drive motor) + the target generated power of the generator (calculated according to the target speed of the generator and the target torque of the generator) + the target generated power loss of the generator (determined by looking up a table according to the target speed of the generator and the target torque of the generator).

Then, the target charge and discharge power loss of the battery is determined by looking up a table according to the target charge and discharge power of the battery.

Taking the above-mentioned target power of the engine corresponding to the most economical operating point of the engine as the reference, increasing N preset power Mkw or decreasing N power Mkw respectively, for example increasing or decreasing 1kw, 2kw, 3kw......Nkw respectively, to obtain a total of 2N+1 power points; then the target power of the engine corresponding to each of the 2N+1 power points can be obtained, and according to the optimal fuel economy operating curve of the engine, the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery and the target SOC of the battery corresponding to each of the 2N+1 power points are obtained, and the above calculation is repeated to obtain the equivalent fuel consumption power of the 2N+1 power points under the series mode.

In step S211, a specific method for determining target operational parameters of a plurality of operating points under the parallel mode includes:

locating a most economical operating point of the engine under the parallel mode in an optimal fuel economy curve of the engine first;

taking a target torque of the engine corresponding to the most economical operating point of the engine as a reference torque point, increasing or decreasing N torque points at an equal interval to obtain 2N+1 torque points in total, and determining the 2N+1 torque points as a plurality of operating points under the parallel mode;

determining a target speed of the engine, a target torque of the engine, a target power loss of the engine, a target torque of the drive motor, a target power loss of the drive motor, a target charge and discharge power loss of the battery, and a target SOC of the battery corresponding to each of the 2N+1 torque points respectively;

determining the target speed of the engine, the target torque of the engine, the target power loss of the engine, the target torque of the drive motor, the target power loss of the drive motor, the target charge and discharge power loss of the battery, and the target SOC of the battery corresponding to each torque point as target operational parameters for next operating point under the parallel mode.

The target speed of the engine is obtained by the actual speed of the drive motor and the speed ratio from the engine to the drive motor.

The optimal fuel economy curve is obtained from a universal curve of the engine.

Where, under the parallel mode, the target speed of the engine is obtained by dividing the current speed of the drive motor by the transmission speed ratio from the engine to the drive motor; the target torque of the engine is determined by the target speed of the engine and the optimal fuel economy curve of the engine, and the optimal fuel economy curve of the engine is obtained by the pre-calibrated universal characteristics curve of the engine related to fuel consumption, speed, and torque; and the target torque of the drive motor is determined by the demand torque at the driver's wheel end, the target torque of the engine, the engine-to-wheel end speed ratio, and the drive motor-to-wheel end speed ratio. The demand torque at the driver's wheel end is obtained by looking up a table based on the relationship between the pre-calibrated vehicle speed and the accelerator pedal signal; the target power loss of the engine is obtained by looking up a pre-calibrated table of the power loss of the engine related to the target speed of the engine and the target torque of the engine; and the target charge and discharge power of the battery is determined by the current speed of the drive motor, the target torque of the drive motor, and the target power loss of the drive motor.

Taking the above-mentioned target torque of the engine corresponding to the most economical operating point of the engine as the reference, increasing N torque Mnm or decreasing N torque Mnm, for example increasing or decreasing 1nm, 2nm, 3nm......Nnm respectively, to obtain a total of 2N+1 torque points; then the target torque of the engine, the target torque of the drive motor, the target power loss of the engine, the target power loss of the drive motor, and the target charge and discharge power loss of the battery corresponding to each of the 2N+1 torque points are obtained; and the above calculation is repeated to obtain 2N+1 equivalent fuel consumption efficiency.

In step S212, a step of determining, based on the actual operational parameters corresponding to the current operating point of the vehicle and the target operational parameters corresponding to the operating point of the vehicle under the series mode, equivalent fuel consumption power corresponding to the operating point of the vehicle under the series mode includes:

calculating the equivalent fuel consumption power $J_{series}$ corresponding to the operating point under the series mode by the formula:

$$J_{series} = P_{fuel-series}(t) + s_{series}(t) * P_{batt-series}(t)$$

where, $s_{series}(t)$ is an equivalent factor corresponding to the operating point under the series mode, and its value is obtained by looking up a predetermined relationship table of a preset real-time SOC of the battery, the target SOC of the battery corresponding to the operating point under the series mode, and an equivalent factor under the series mode;

$P_{fuel}$-series (t) is a fuel consumption power corresponding to the operating point under the series mode, $P_{fuel}$-series (t) = (a target speed of the engine corresponding to the operating point under the series mode * a target torque of the engine corresponding to the operating point under the series mode) / 9550 + a target power loss of the engine corresponding to the operating point under the series mode;

$P_{batt}$-series (t) is an electric energy consumption power corresponding to the operating point under the series mode, $P_{batt}$-series (t) = (a target speed of the generator corresponding to the operating point under the series mode * a target torque of the generator corresponding to the operating point under the series mode) / 9550 + a target power loss of the generator corresponding to the operating point under the series mode + (a current speed of the drive motor * a target torque of the drive motor corresponding to the operating point under the series mode) / 9550 + a target power loss of the drive motor corresponding to the operating point under the series mode + a target charge and discharge power loss of the battery corresponding to the operating point under the series mode.

Similarly, in step S212, a step of determining, based on the actual operational parameters corresponding to the current operating point of the vehicle and the target operational parameters corresponding to the operating point of the vehicle under the parallel mode, equivalent fuel consumption power corresponding to the operating point of the vehicle under the parallel mode includes:

calculating the equivalent fuel consumption power $J_{parallel}$ corresponding to the operating point under the parallel mode by the formula:

$$J_{parallel} = P_{fuel-parallel}(t) + s_{parallel}(t) * P_{batt-parallel}(t)$$

where, $s_{parallel}(t)$ is an equivalent factor corresponding to the operating point under the parallel mode, and its value is obtained by looking up a predetermined relationship table of a preset real-time SOC of the battery, the target SOC of the battery corresponding to the operating point under the parallel mode, and an equivalent factor under the parallel mode;

$P_{fuel-parallel}(t)$ is a fuel consumption power corresponding to the operating point under the parallel mode, $P_{fuel}$-parallel (t) = (a target speed of the engine corresponding to the operating point under the parallel mode * a target torque of the engine corresponding to the operating point under the parallel mode) / 9550 + a target power loss of the engine corresponding to the operating point under the parallel mode;

$P_{batt-parallel}(t)$ is an electric energy consumption power corresponding to the operating point under the parallel mode, $P_{batt-parallel}(t)$ = (a current speed of the drive motor * a target torque of the drive motor corresponding to the operating point under the parallel mode) / 9550 + a target power loss of the drive motor corresponding to the operating point under the parallel mode + a target charge and discharge power loss of the battery corresponding to the operating point under the parallel mode.

Under the pure electric mode, the step S20 includes the following.

Step S221, determine, according to the actual operational parameters corresponding to the current operating point of the vehicle, a demand torque at a driver's wheel end and a target SOC of the battery.

Step S222, determine, based on the demand torque at the driver's wheel end, a target torque of the drive motor, a target power loss of the drive motor and a target charge and discharge power loss of the battery of the vehicle under the pure electric mode.

Step S223, determine an operating point corresponding to the target torque of the drive motor, the target power loss of the drive motor, the target charge and discharge power loss of the battery and the target SOC of the battery as a most economical operating point of the vehicle under the pure electric mode, and determine, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode.

In step S221, the demand torque at the driver's wheel end is determined according to the vehicle speed and the accelerator pedal signal. The demand torque at the driver's wheel end is obtained by looking up a table according to the vehicle speed and the accelerator pedal opening, and a predetermined correspondence table of the vehicle speed and the accelerator pedal opening is pre-calibrated.

In step S221, the target SOC of the battery is determined according to the ambient temperature, altitude and battery temperature. The predetermined correspondence of different ambient temperatures, altitudes, battery temperatures and target SOCs of the battery is pre-calibrated, and the target SOCs of the battery corresponding to different driving modes are determined by looking up the table; under the same condition of ambient temperature, altitude and battery temperature, the target SOCs of the battery corresponding to different driving modes are different. Similarly, in the present embodiment, methods for determining the target SOC of the battery under the parallel mode and under the series mode in the step S211 are consistent with the description here.

In step S223, the step of determining, based on the actual operational parameters, the target torque of the drive motor, the target power loss of the drive motor, the target charge and discharge power loss of the battery and the target SOC of the battery corresponding to the current operating point of the vehicle, the optimal equivalent fuel consumption power corresponding to the most economical operating point of the vehicle under the pure electric mode includes:

calculating the equivalent fuel consumption power $J_{EV}$ corresponding to the operating point under the pure electric mode by the formula:

$$J_{EV} = s_{EV}(t) * P_{battEV}(t)$$

where, $s_{EV}(t)$ is an equivalent factor corresponding to the operating point under the pure electric mode, and its value is obtained by looking up a predetermined relationship table of a preset real-time SOC of the battery, the target SOC of the battery corresponding to the operating point under the pure electric mode, and an equivalent factor under the pure electric mode;

$P_{battEV}$ (t) is an electric energy consumption power corresponding to the operating point under the pure electric mode,
$P_{battEV}$ (t) = a current speed of the drive motor * a target torque of the drive motor corresponding to the operating point under the pure electric mode / 9550 + a target power loss of the drive motor corresponding to the operating point under the pure electric mode + a target charge and discharge power loss of the battery corresponding to the operating point under the pure electric mode.

The target torque of the drive motor is determined by the demand torque at the driver's wheel end and the drive motor-to-wheel end speed ratio under the pure electric mode.

Further, the target power of the drive motor is obtained from the target torque of the drive motor and the current speed of the drive motor under the pure electric mode. This technology is a prior art, and the target charge and discharge power of the battery is determined by adding the above power to the power loss of the drive motor.

Further, the target charge and discharge power loss of the battery is determined by looking up a predetermined correspondence table between the target charge and discharge power of the battery and the target charge and discharge power loss of the battery.

Step S30, determine, based on the optimal equivalent fuel consumption power corresponding to the most economical operating point of the vehicle under all driving modes and the equivalent fuel consumption power corresponding to the current operating point of the vehicle, an optimal economic operating point of the hybrid vehicle.

The step S30 specifically includes the following.

Step S311, select a minimum value from the optimal equivalent fuel consumption power corresponding to the most economical operating point of the vehicle under all driving modes.

Step S312, determine, if a difference between the equivalent fuel consumption power corresponding to the current operating point of the vehicle and the minimum value is ≥ a preset calibration value, an operating point corresponding to the minimum value as the optimal economic operating point.

Step S313: determine, if a difference between the equivalent fuel consumption power corresponding to the current operating point of the vehicle and the minimum value is < a preset calibration value, the current operating point of the vehicle as an optimal economic operating point.

After determining the optimal economic operating point, the most economical driving mode of the vehicle can be determined, and this enables driving mode adjustment from an economic perspective, so that the vehicle operates at the optimal economic operating point. The above method in the present embodiment no longer relies solely on the accuracy of the SOC and vehicle speed signals as well as calibration experience, but calculates the demand torque at the driver's wheel end based on the actual operational parameters corresponding to the current operating point of the vehicle, and at the same time calculates the most economical operating point at which the vehicle may operate under different driving modes. By calculating the equivalent fuel consumption power at the current operating point and the optimal equivalent fuel consumption power corresponding to the most economical operating point of the vehicle under different driving modes, the optimal economic operating point of the vehicle is determined, so that the vehicle can always operate in the state with the highest comprehensive energy utilization efficiency, achieve the lowest energy consumption of the vehicle, improve the comprehensive driving range of the vehicle, and provide users an ultimate long-range experience.

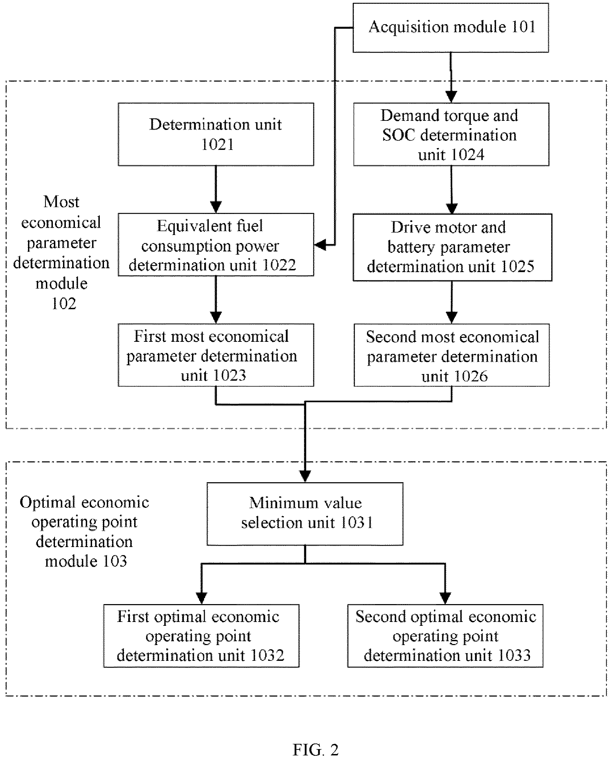

As shown in FIG. 2, the present application provides an apparatus for determining an optimal economic operating point of a hybrid vehicle, and the hybrid vehicle at least includes: a power battery, an engine, a drive motor, a generator and a clutch, where the engine may be connected to or disconnected from a wheel end through the clutch, the drive motor is directly connected to the wheel end, the drive motor is connected to the power battery, the generator is connected to the engine, and the generator is connected to the power battery and/or the drive motor, and the apparatus includes:

an acquisition module 101, configured to acquire actual operational parameters and equivalent fuel consumption power corresponding to a current operating point of the vehicle;

a most economical parameter determination module 102, configured to determine, in combination with the actual operational parameters corresponding to a current operating point of the vehicle, a most economical operating point of the vehicle under different driving modes and an optimal equivalent fuel consumption power corresponding to the most economical operating point;

an optimal economic operating point determination module 103, configured to determine, based on the optimal equivalent fuel consumption power corresponding to the most economical operating point of the vehicle under all driving modes and the equivalent fuel consumption power corresponding to a current operating point of the vehicle, an optimal economic operating point of the hybrid vehicle.

Preferably, the driving modes of the vehicle includes a series mode and a parallel mode, and the most economical parameter determination module 102 includes:

a determination unit 1021, configured to determine target operational parameters corresponding to a plurality of operating points of the vehicle under a corresponding driving mode;

an equivalent fuel consumption power determination unit 1022, configured to determine, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode;

a first most economical parameter determination unit 1023, configured to determine, from the equivalent fuel consumption power corresponding to the plurality of operating points of the vehicle under the corresponding driving mode, an equivalent fuel consumption power with a minimum value as the optimal equivalent fuel consumption power, and determine an operating point corresponding to the optimal equivalent fuel consumption power as the most economical operating point of the vehicle under the corresponding driving mode.

Preferably, when the driving mode of the vehicle is the series mode, the determination unit 1021 is specifically configured to:

locate a most economical operating point of the engine under the series mode in a universal characteristics curve of the engine first;

take a target power of the engine corresponding to the most economical operating point of the engine as a reference power point, increase or decrease N power points at an equal interval in an optimal fuel economy curve of the engine to obtain 2N+1 power points in total, and determine the 2N+1 power points as the plurality of operating points under the series mode;

determine a target torque of the engine, a target speed of the engine, a target power loss of the engine, a target torque of the generator, a target speed of the generator, a target power loss of the generator, a target torque of the drive motor, a target power loss of the drive motor, a target charge and discharge power loss of the battery, and a target SOC of the battery corresponding to each of the 2N+1 power points respectively;

determine the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery, and the target SOC of the battery corresponding to each power point as target operational parameters for next operating point under the series mode.

Preferably, when the driving mode of the vehicle is the parallel mode, the determination unit 1021 is specifically configured to:

locate a most economical operating point of the engine under the parallel mode in an optimal fuel economy curve of the engine first;

take a target torque of the engine corresponding to the most economical operating point of the engine as a reference torque point, increase or decrease N torque points at an equal interval to obtain 2N+1 torque points in total, and determine the 2N+1 torque points as a plurality of operating points under the parallel mode;

determine a target speed of the engine, a target torque of the engine, a target power loss of the engine, a target torque of the drive motor, a target power loss of the drive motor, a target charge and discharge power loss of the battery, and a target SOC of the battery corresponding to each of the 2N+1 torque points respectively;

determine the target speed of the engine, the target torque of the engine, the target power loss of the engine, the target torque of the drive motor, the target power loss of the drive motor, the target charge and discharge power loss of the battery, and the target SOC of the battery corresponding to each torque point as target operational parameters for next operating point under the parallel mode.

Preferably, the driving modes of the vehicle further includes a pure electric mode, and the most economical parameter determination module 102 further includes:

a demand torque and SOC determination unit 1024, configured to determine, according to the actual operational parameters corresponding to the current operating point of the vehicle, a demand torque at a driver's wheel end and a target SOC of the battery;

a drive motor and battery parameter determination unit 1025, configured to determine, based on the demand torque at the driver's wheel end, a target torque of the drive motor, a target power loss of the drive motor, and a target charge and discharge power loss of the battery of the vehicle under the pure electric mode;

a second most economical parameter determination unit 1026, configured to determine an operating point corresponding to the target torque of the drive motor, the target power loss of the drive motor, the target charge and discharge power loss of the battery and the target SOC of the battery as a most economical operating point of the vehicle under the pure electric mode, and determine, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode.

Preferably, the optimal economic operating point determination module 103 includes:

a minimum value selection unit 1031, configured to select a minimum value from the optimal equivalent fuel consumption power corresponding to the most economical operating point of the vehicle under all driving modes; a first optimal economic operating point determination unit 1032, configured to determine, if a difference between the equivalent fuel consumption power corresponding to the current operating point of the vehicle and the minimum value is ≥ a preset calibration value, an operating point corresponding to the minimum value as the optimal economic operating point; a second optimal economic operating point determination unit 1033, configured to determine, if a difference between the equivalent fuel consumption power corresponding to the current operating point of the vehicle and the minimum value is < a preset calibration value, the current operating point of the vehicle as an optimal economic operating point.

In the above-mentioned apparatus of the present embodiment, each module may invoke the specific steps of the method in the above-mentioned embodiment during the execution of the specific logical process, and the apparatus has the same technical effects as the above-mentioned method.

The present application also provides a vehicle, where the vehicle includes the method and the apparatus for determining the optimal economic operating point of the hybrid vehicle as described above.

The present application also provides a control device, where the control device includes a processor, a memory, and a program or instructions stored in the memory and running in the processor, where the program or the instructions, when executed by the processor, implement steps of the method for determining the optimal economic operating point of the hybrid vehicle as described above.

The present application also provides a readable storage medium storing a program or instructions which, when executed by a processor, implement steps of the method for determining the optimal economic operating point of the hybrid vehicle as described above.

The present application also provides a computer program product, including a computer program which, when executed by a processor, implements steps of the method for determining the optimal economic operating point of the hybrid vehicle as described above.

The above are the preferred implementations of the present application. It should be noted that for a person of ordinary skill in the art, without departing from the principles described in the present application, several improvements and modifications may be made, and these improvements and modifications should also be considered within the scope of protection of the present application.

## Claims

1. A method for determining an optimal economic operating point of a hybrid vehicle, wherein the hybrid vehicle at least comprises: a power battery, an engine, a drive motor, a generator and a clutch, the engine is connected to or disconnected from a wheel end through the clutch, the drive motor is directly connected to the wheel end, the drive motor is connected to the power battery, the generator is connected to the engine, and the generator is connected to the power battery and/or the drive motor, and the method comprises:

   obtaining actual operational parameters and equivalent fuel consumption power corresponding to a current operating point of the vehicle;
   determining, in combination with the actual operational parameters corresponding to a current operating point of the vehicle, a most economical operating point of the vehicle under different driving modes and an optimal equivalent fuel consumption power corresponding to the most economical operating point;
   determining, based on the optimal equivalent fuel consumption power corresponding to the most economical operating point of the vehicle under all driving modes and the equivalent fuel consumption power corresponding to the current operating point of the vehicle, an optimal economic operating point of the hybrid vehicle.

2. The method for determining the optimal economic operating point of the hybrid vehicle according to claim 1, wherein driving modes of the vehicle comprise a series mode and a parallel mode, and a step of determining, in combination with the actual operational parameters corresponding to the current operating point of the vehicle, the most economical operating point of the vehicle under the series mode and the parallel mode and the optimal equivalent fuel consumption power corresponding to the most economical operating point comprises:

determining target operational parameters corresponding to a plurality of operating points of the vehicle under a corresponding driving mode;

determining, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode;

determining, from the equivalent fuel consumption power corresponding to the plurality of operating points of the vehicle under the corresponding driving mode, an equivalent fuel consumption power with a minimum value as the optimal equivalent fuel consumption power, and determining an operating point corresponding to the optimal equivalent fuel consumption power as the most economical operating point of the vehicle under the corresponding driving mode.

3. The method for determining the optimal economic operating point of the hybrid vehicle according to claim 2, wherein a specific method for determining target operational parameters of a plurality of operating points under the series mode comprises:

locating a most economical operating point of the engine under the series mode in a universal characteristics curve of the engine first;

taking a target power of the engine corresponding to the most economical operating point of the engine as a reference power point, increasing or decreasing N power points at an equal interval in an optimal fuel economy curve of the engine to obtain 2N+1 power points in total, and determining the 2N+1 power points as the plurality of operating points under the series mode;

determining a target torque of the engine, a target speed of the engine, a target power loss of the engine, a target torque of the generator, a target speed of the generator, a target power loss of the generator, a target torque of the drive motor, a target power loss of the drive motor, a target charge and discharge power loss of the battery, and a target SOC of the battery corresponding to each of the 2N+1 power points respectively;

determining the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery, and the target SOC of the battery corresponding to each power point as target operational parameters for next operating point under the series mode.

4. The method for determining the optimal economic operating point of the hybrid vehicle according to claim 2, wherein a specific method for determining target operational parameters of a plurality of operating points under the parallel mode comprises:

locating a most economical operating point of the engine under the parallel mode in an optimal fuel economy curve of the engine first;

taking a target torque of the engine corresponding to the most economical operating point of the engine as a reference torque point, increasing or decreasing N torque points at an equal interval to obtain 2N+1 torque points in total, and determining the 2N+1 torque points as a plurality of operating points under the parallel mode;

determining a target speed of the engine, a target torque of the engine, a target power loss of the engine, a target torque of the drive motor, a target power loss of the drive motor, a target charge and discharge power loss of the battery, and a target SOC of the battery corresponding to each of the 2N+1 torque points respectively;

determining the target speed of the engine, the target torque of the engine, the target power loss of the engine, the target torque of the drive motor, the target power loss of the drive motor, the target charge and discharge power loss of the battery, and the target SOC of the battery corresponding to each torque point as target operational parameters for next operating point under the parallel mode.

5. The method for determining the optimal economic operating point of the hybrid vehicle according to claim 1 or 2, wherein driving modes of the vehicle further comprise a pure electric mode, and a step of determining, in combination with the actual operational parameters corresponding to the current operating point of the vehicle, the most economical operating point of the vehicle under the pure electric mode and the optimal equivalent fuel consumption power corresponding to the most economical operating point comprises:

determining, according to the actual operational parameters corresponding to the current operating point of the vehicle, a demand torque at a driver's wheel end and a target SOC of the battery;

determining, based on the demand torque at the driver's wheel end, a target torque of the drive motor, a target power loss of the drive motor, and a target charge and discharge power loss of the battery of the vehicle under the pure electric mode;

determining an operating point corresponding to the target torque of the drive motor, the target power loss of the drive motor, the target charge and discharge power loss of the battery and the target SOC of the battery as a most economical operating point of the vehicle under the pure electric mode, and determining, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode.

6. The method for determining the optimal economic operating point of the hybrid vehicle according to any one of claims 3, 4 or 5, wherein the actual operational parameters corresponding to the current operating point of the vehicle comprise: a vehicle speed, an accelerator pedal signal, an ambient temperature, an altitude and a battery temperature, and the step of determining, according to the actual operational parameters corresponding to the current operating point of the vehicle, the demand torque at the driver's wheel end and the target SOC of the battery comprises:

determining, according to the vehicle speed and the accelerator pedal signal, the demand torque at the driver's wheel end;

determining, according to the ambient temperature, the altitude and the battery temperature, the target SOC of the battery corresponding to different driving modes;

wherein the target SOCs of the battery corresponding to different driving modes are different under the same condition of the ambient temperature, the altitude, and the battery temperature.

7. The method for determining the optimal economic operating point of the hybrid vehicle according to claim 3, wherein the actual operational parameters corresponding to the current operating point of the vehicle further comprise: a real-time SOC of the battery and a current speed of the drive motor, and a step of determining, based on the actual operational parameters corresponding to the current operating point of the vehicle and the target operational parameters corresponding to the operating point of the vehicle under the series mode, equivalent fuel consumption power corresponding to the operating point of the vehicle under the series mode comprises:

calculating the equivalent fuel consumption power $J_{series}$ corresponding to the operating point under the series mode by the formula:

$$J_{series} = P_{fuel-series}(t) + s_{series}(t) * P_{batt-series}(t)$$

wherein, $s_{series}(t)$ is an equivalent factor corresponding to the operating point under the series mode, and a value of the $s_{series}(t)$ is obtained by looking up a predetermined relationship table of a preset real-time SOC of the battery, the target SOC of the battery corresponding to the operating point under the series mode, and an equivalent factor under the series mode;

$P_{fuel}$-series (t) is a fuel consumption power corresponding to the operating point under the series mode, $P_{fuel}$-series (t) = (a target speed of the engine corresponding to the operating point under the series mode * a target torque of the engine corresponding to the operating point under the series mode) / 9550 + a target power loss of the engine corresponding to the operating point under the series mode;

$P_{batt}$-series (t) is an electric energy consumption power corresponding to the operating point under the series mode, $P_{batt}$-series (t) = (a target speed of the generator corresponding to the operating point under the series mode * a target torque of the generator corresponding to the operating point under the series mode) / 9550 + a target power loss of the generator corresponding to the operating point under the series mode + (a current speed of the drive motor * a target torque of the drive motor corresponding to the operating point under the series mode) / 9550 + a target power loss of the drive motor corresponding to the operating point under the series mode + a target charge and discharge power loss of the battery corresponding to the operating point under the series mode.

8. The method for determining the optimal economic operating point of the hybrid vehicle according to claim 4, wherein the actual operational parameters corresponding to the current operating point of the vehicle further comprise: a real-time SOC of the battery and a current speed of the drive motor, and a step of determining, based on the actual operational parameters corresponding to the current operating point of the vehicle and the target operational parameters corresponding to the operating point of the vehicle under the parallel mode, equivalent fuel consumption power corresponding to the operating point of the vehicle under the parallel mode comprises:

calculating the equivalent fuel consumption power $J_{parallel}$ corresponding to the operating point under the parallel mode by the formula:

$$J_{parallel} = P_{fuel-parallel}(t) + s_{parallel}(t) * P_{batt-parallel}(t)$$

wherein, $s_{parallel}(t)$ is an equivalent factor corresponding to the operating point under the parallel mode, and a value of the $s_{parallel}(t)$ is obtained by looking up a predetermined relationship table of a preset real-time SOC of the battery, the target SOC of the battery corresponding to the operating point under the parallel mode, and an equivalent factor under the parallel mode;

$P_{fuel-parallel}(t)$ is a fuel consumption power corresponding to the operating point under the parallel mode, $P_{fuel-parallel}(t)$ = (a target speed of the engine corresponding to the operating point under the parallel mode * a target torque of the engine corresponding to the operating point under the parallel mode) / 9550 + a target power loss of the engine corresponding to the operating point under the parallel mode;

$P_{batt-parallel}(t)$ is an electric energy consumption power corresponding to the operating point under the parallel mode, $P_{batt-parallel}(t)$ = (a current speed of the drive motor * a target torque of the drive motor corresponding to the operating point under the parallel mode) / 9550 + a target power loss of the drive motor corresponding to the operating point under the parallel mode + a target charge and discharge power loss of the battery corresponding to the operating point under the parallel mode.

9. The method for determining the optimal economic operating point of the hybrid vehicle according to claim 5, wherein actual operational parameters corresponding to the current operating point of the vehicle further comprise: a real-time SOC of the battery and a current speed of the drive motor, and the step of determining, based on the actual operational parameters, the target torque of the drive motor, the target power loss of the drive motor, the target charge and discharge power loss of the battery and the target SOC of the battery corresponding to the current operating point of the vehicle, the optimal equivalent fuel consumption power corresponding to the most economical operating point of the vehicle under the pure electric mode comprises:

calculating the equivalent fuel consumption power $J_{EV}$ corresponding to the operating point under the pure electric mode by the formula:

$$J_{EV} = s_{EV}(t) * P_{battEV}(t)$$

wherein, $s_{EV}(t)$ is an equivalent factor corresponding to the operating point under the pure electric mode, and a value of the $s_{EV}(t)$ is obtained by looking up a predetermined relationship table of a preset real-time SOC of the battery, the target SOC of the battery corresponding to the operating point under the pure electric mode, and an equivalent factor under the pure electric mode;

$P_{battEV}(t)$ is an electric energy consumption power corresponding to the operating point under the pure electric mode, $P_{battEV}(t)$ = a current speed of the drive motor * a target torque of the drive motor corresponding to the operating point under the pure electric mode / 9550 + a target power loss of the drive motor corresponding to the operating point under the pure electric mode + a target charge and discharge power loss of the battery corresponding to the operating point under the pure electric mode.

10. The method for determining the optimal economic operating point of the hybrid vehicle according to claim 1, wherein the step of determining, based on the optimal equivalent fuel consumption power corresponding to the most economical operating point of the vehicle under all driving modes and the equivalent fuel consumption power corresponding to the current operating point of the vehicle, the optimal economic operating point of the hybrid vehicle comprises:

selecting a minimum value from the optimal equivalent fuel consumption power corresponding to the most economical operating point of the vehicle under all driving modes;
determining, if a difference between the equivalent fuel consumption power corresponding to the current operating point of the vehicle and the minimum value is $\geq$ a preset calibration value, an operating point corresponding to the minimum value as the optimal economic operating point;

determining, if a difference between the equivalent fuel consumption power corresponding to the current operating point of the vehicle and the minimum value is < a preset calibration value, the current operating point of the vehicle as an optimal economic operating point.

11. An apparatus for determining an optimal economic operating point of a hybrid vehicle, wherein the hybrid vehicle at least comprises: a power battery, an engine, a drive motor, a generator and a clutch, the engine is connected to or disconnected from a wheel end through the clutch, the drive motor is directly connected to the wheel end, the drive motor is connected to the power battery, the generator is connected to the engine, and the generator is connected to the power battery and/or the drive motor, and the apparatus comprises:

an acquisition module, configured to acquire actual operational parameters and equivalent fuel consumption power corresponding to a current operating point of the vehicle;

a most economical parameter determination module, configured to determine, in combination with the actual operational parameters corresponding to a current operating point of the vehicle, a most economical operating point of the vehicle under different driving modes and an optimal equivalent fuel consumption power corresponding to the most economical operating point;

an optimal economic operating point determination module, configured to determine, based on the optimal equivalent fuel consumption power corresponding to the most economical operating point of the vehicle under all driving modes and the equivalent fuel consumption power corresponding to a current operating point of the vehicle, an optimal economic operating point of the hybrid vehicle.

12. The apparatus for determining the optimal economic operating point of the hybrid vehicle according to claim 11, wherein driving modes of the vehicle comprise a series mode and a parallel mode, and the most economical parameter determination module comprises:

a determination unit, configured to determine target operational parameters corresponding to a plurality of operating points of the vehicle under a corresponding driving mode;

an equivalent fuel consumption power determination unit, configured to determine, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode;

a first most economical parameter determination unit, configured to determine, from the equivalent fuel consumption power corresponding to the plurality of operating points of the vehicle under the corresponding driving mode, an equivalent fuel consumption power with a minimum value as the optimal equivalent fuel consumption power, and determine an operating point corresponding to the optimal equivalent fuel consumption power as the most economical operating point of the vehicle under the corresponding driving mode.

13. The apparatus for determining the optimal economic operating point of the hybrid vehicle according to claim 12, wherein when the driving mode of the vehicle is the series mode, the determination unit is specifically configured to:

locate a most economical operating point of the engine under the series mode in a universal characteristics curve of the engine first;

take a target power of the engine corresponding to the most economical operating point of the engine as a reference power point, increase or decrease N power points at an equal interval in an optimal fuel economy curve of the engine to obtain 2N+1 power points in total, and determine the 2N+1 power points as the plurality of operating points under the series mode;

determine a target torque of the engine, a target speed of the engine, a target power loss of the engine, a target torque of the generator, a target speed of the generator, a target power loss of the generator, a target torque of the drive motor, a target power loss of the drive motor, a target charge and discharge power loss of the battery, and a target SOC of the battery corresponding to each of the 2N+1 power points respectively;

determine the target torque of the engine, the target speed of the engine, the target power loss of the engine, the target torque of the generator, the target speed of the generator, the target power loss of the generator, the target torque of the drive motor, the target power loss of the drive motor, the target charge and discharge power loss of the battery, and the target SOC of the battery corresponding to each power point as target operational parameters for next operating point under the series mode.

**EP 4 678 491 A1**

14. The apparatus for determining the optimal economic operating point of the hybrid vehicle according to claim 12, wherein when the driving mode of the vehicle is the parallel mode, the determination unit is specifically configured to:

locate a most economical operating point of the engine under the parallel mode in an optimal fuel economy curve of the engine first;

take a target torque of the engine corresponding to the most economical operating point of the engine as a reference torque point, increase or decrease N torque points at an equal interval to obtain 2N+1 torque points in total, and determine the 2N+1 torque points as a plurality of operating points under the parallel mode;

determine a target speed of the engine, a target torque of the engine, a target power loss of the engine, a target torque of the drive motor, a target power loss of the drive motor, a target charge and discharge power loss of the battery, and a target SOC of the battery corresponding to each of the 2N+1 torque points respectively;

determine the target speed of the engine, the target torque of the engine, the target power loss of the engine, the target torque of the drive motor, the target power loss of the drive motor, the target charge and discharge power loss of the battery, and the target SOC of the battery corresponding to each torque point as target operational parameters for next operating point under the parallel mode.

15. The apparatus for determining the optimal economic operating point of the hybrid vehicle according to claim 11 or 12, wherein driving modes of the vehicle further comprise a pure electric mode, and the most economical parameter determination module further comprises:

a demand torque and SOC determination unit, configured to determine, according to the actual operational parameters corresponding to the current operating point of the vehicle, a demand torque at a driver's wheel end and a target SOC of the battery;

a drive motor and battery parameter determination unit, configured to determine, based on the demand torque at the driver's wheel end, a target torque of the drive motor, a target power loss of the drive motor, and a target charge and discharge power loss of the battery of the vehicle under the pure electric mode;

a second most economical parameter determination unit, configured to determine an operating point corresponding to the target torque of the drive motor, the target power loss of the drive motor, the target charge and discharge power loss of the battery and the target SOC of the battery as a most economical operating point of the vehicle under the pure electric mode, and determine, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode.

16. The apparatus for determining the optimal economic operating point of the hybrid vehicle according to claim 11, wherein the optimal economic operating point determination module comprises:

a minimum value selection unit, configured to select a minimum value from the optimal equivalent fuel consumption power corresponding to the most economical operating point of the vehicle under all driving modes;

a first optimal economic operating point determination unit, configured to determine, if a difference between the equivalent fuel consumption power corresponding to the current operating point of the vehicle and the minimum value is ≥ a preset calibration value, an operating point corresponding to the minimum value as the optimal economic operating point;

a second optimal economic operating point determination unit, configured to determine, if a difference between the equivalent fuel consumption power corresponding to the current operating point of the vehicle and the minimum value is < a preset calibration value, the current operating point of the vehicle as an optimal economic operating point.

17. A vehicle, comprising the apparatus for determining a target driving mode of the hybrid vehicle from an economic perspective according to any one of claims 11 to 16.

18. A control device, comprising a processor, a memory, and a program or instructions stored in the memory and running in the processor, wherein the program or the instructions, when executed by the processor, implement steps of the method for determining the optimal economic operating point of the hybrid vehicle according to any one of claims 1 to 10.

19. A readable storage medium, storing a program or instructions which, when executed by a processor, implement steps of the method for determining the optimal economic operating point of the hybrid vehicle according to any one of claims 1 to 10.

20. A computer program product, comprising a computer program which, when executed by a processor, implements steps of the method for determining the optimal economic operating point of the hybrid vehicle according to any one of claims 1 to 10.

S10 — Obtain actual operational parameters corresponding to the current operating point of the vehicle, obtain actual operational parameters and equivalent fuel consumption power corresponding to a current operating point of the vehicle

S211 — Determine, under the series mode and the parallel mode, target operational parameters corresponding to a plurality of operating points of the vehicle under a corresponding driving mode

S221 — Determine, according to the actual operational parameters corresponding to the current operating point of the vehicle, a driver demand torque and a target SOC of the battery

S212 — Determine, based on the actual operational parameters corresponding to the current operating point of the vehicle and the target operational parameters corresponding to the plurality of operating points of the vehicle under the corresponding driving mode, equivalent fuel consumption power corresponding to the plurality of operating points of the vehicle under the corresponding driving mode

S222 — Determine, based on the driver demand torque, a target torque of the drive motor, a target power loss of the drive motor and a target charge and discharge power loss of the battery of the vehicle under the pure electric mode

S213 — Determine, from the equivalent fuel consumption power corresponding to the plurality of operating points of the vehicle under the corresponding driving mode, an equivalent fuel consumption power with a minimum value as an optimal equivalent fuel consumption power, and determine an operating point corresponding to the optimal equivalent fuel consumption power as a most economical operating point of the vehicle under the corresponding driving mode

S223 — Determine an operating point corresponding to the target torque of the drive motor, the target power loss of the drive motor, the target charge and discharge power loss of the battery and the target SOC of the battery as a most economical operating point of the vehicle under the pure electric mode, and determine, based on the actual operational parameters, the target torque of the drive motor, the target power loss of the drive motor, the target charge and discharge power loss of the battery and the target SOC of the battery corresponding to the current operating point of the vehicle, an optimal equivalent fuel consumption power corresponding to the most economical operating point of the vehicle under the pure electric mode

S20

S311 — Select a minimum value from the optimal equivalent fuel consumption power corresponding to the most economical operating point of the vehicle under all driving modes

S312 — Determine, if a difference between the equivalent fuel consumption power corresponding to the current operating point of the vehicle and the minimum value is ≥ a preset calibration value, an operating point corresponding to the minimum value as the optimal economic operating point

S313 — Determine, if a difference between the equivalent fuel consumption power corresponding to the current operating point of the vehicle and the minimum value is < a preset calibration value, the current operating point of the vehicle as an optimal economic operating point

S30

FIG. 1

Acquisition module 101

Most economical parameter determination module 102

Determination unit 1021

Demand torque and SOC determination unit 1024

Equivalent fuel consumption power determination unit 1022

Drive motor and battery parameter determination unit 1025

First most economical parameter determination unit 1023

Second most economical parameter determination unit 1026

Optimal economic operating point determination module 103

Minimum value selection unit 1031

First optimal economic operating point determination unit 1032

Second optimal economic operating point determination unit 1033

FIG. 2

## INTERNATIONAL SEARCH REPORT

| International application No. |
| --- |
| **PCT/CN2024/075604** |

| A. | CLASSIFICATION OF SUBJECT MATTER |
| --- | --- |

B60W20/15(2016.01)i

According to International Patent Classification (IPC) or to both national classification and IPC

| B. | FIELDS SEARCHED |
| --- | --- |

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 车辆, 等效, 工作点, 混动, 混合动力, 经济, 燃油, 消耗, 运行, 运行参数, 最优, vehicle, equivalents, working w points, mixes, hybrids, economics, fuel, consumption, operation, operating w parameters, optimum

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116331186 A (CHONGQING CHANG'AN AUTOMOBILE CO., LTD.) 27 June 2023 (2023-06-27) claims 1-20 | 1-20 |
| X | CN 112590528 A (BYD CO., LTD.) 02 April 2021 (2021-04-02) description, paragraphs [0036]-[0158], and figures 1-13 | 1, 11, 17-20 |
| A | CN 110015154 A (SAIC MOTOR CORP., LTD.) 16 July 2019 (2019-07-16) entire document | 1-20 |
| A | CN 112677956 A (JILIN UNIVERSITY) 20 April 2021 (2021-04-20) entire document | 1-20 |
| A | CN 113335266 A (TONGJI UNIVERSITY) 03 September 2021 (2021-09-03) entire document | 1-20 |
| A | JP 2008240680 A (TOYOTA MOTOR CORP.; TOYOTA CENTRAL RESEARCH & DEVELOPMENT LABORATORIES, INC.) 09 October 2008 (2008-10-09) entire document | 1-20 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 May 2024** | **21 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | Publication date (day/month/year) |
|---|---|---|---|---|---|
| CN | 116331186 | A | 27 June 2023 | None | |
| CN | 112590528 | A | 02 April 2021 | None | |
| CN | 110015154 | A | 16 July 2019 | None | |
| CN | 112677956 | A | 20 April 2021 | None | |
| CN | 113335266 | A | 03 September 2021 | None | |
| JP | 2008240680 | A | 09 October 2008 | None | |

Form PCT/ISA/210 (patent family annex) (July 2022)

**EP 4 678 491 A1**

**Patent documents cited in the description**

- CN 202310232056